# EUROPÄISCHE PATENTSCHRIFT

(11) **EP 2 708 407 B1**
(45) Veröffentlichungstag und Bekanntmachung des Hinweises auf die Patenterteilung: **30.07.2014**
(21) Anmeldenummer: 12184606.7
(22) Anmeldetag: 17.09.2012
(51) Int. Cl.: B60N 2/28, B60N 2/48

(54) **Kindersitz, insbesondere Kindersicherheitssitz für Fahrzeuge**
Child seat, in particular for vehicles
Siège pour enfants, notamment siège de sécurité pour enfant pour véhicule automobile

(43) Veröffentlichungstag der Anmeldung: 19.03.2014
(73) Patentinhaber: HAUCK GmbH & Co. KG, 96242 Sonnefeld (DE)
(72) Erfinder: Neuber, Tobias, 73035 Göppingen (DE); Unseld, Reinhold, 89176 Asselfingen (DE)
(74) Vertreter: Raffay & Fleck

(56) Entgegenhaltungen:
- EP-A2- 1 621 395
- WO-A2-2005/079159

## Beschreibung

Die Erfindung betrifft einen Kindersitz gemäß den Merkmalen des Oberbegriffs des Patentanspruches 1. Ein solcher Kindersitz weist also ein Sitzflächenteil und ein Lehnenteil auf, und an dem Lehnenteil ist eine Kopfstütze angeordnet. Die Kopfstütze verfügt dabei über seitliche Stützwangen, eine erste und eine zweite derartige. Diese Stützwangen liegen sich in im Wesentlichen horizontaler Richtung in einem Abstand gegenüber und sind über eine Abstandseinstelleinrichtung in diesem Abstand zueinander verstellbar und in zumindest zwei Einstellpositionen mit jeweils unterschiedlichem Abstand zueinander relativ zu dem Lehnenteil festlegbar.

Ein solcher Kindersitz kann insbesondere, ohne auf diese Anwendung beschränkt zu sein, ein Kindersicherheitssitz für Fahrzeuge sein. Es kommt aber auch in Betracht, dass ein solcher Kindersitz z.B. der in einer Kinder- oder Babykarre installierte Sitz ist oder auch ein Sitz in einem Kinderstuhl bzw. Kinderhochstuhl.

Am weitesten verbreitet sind derartige Kindersitze aber wie bereits ausgeführt in der Kraftfahrzeugsicherheitstechnik. Dort sind unterschiedliche Kindersitzkategorien gegeben, die für Kinder unterschiedlicher Alters-, Größen- bzw. Gewichtsklassen vorgesehen sind. Eine grobe Unterteilung bei den Kindersicherheitssitzen für Kraftfahrzeuge lässt sich nach der aktuellen Klassifizierung machen in Sitze der Gruppe 0/0+, Sitze der Gruppe 1 und Sitze der Gruppen 2 oder 3. Die erstgenannte Gruppe von Sitzen ist für Säuglinge und Kinder bis zu 1½ Jahren gedacht, die zweite Gruppe richtet sich an Kleinstkinder, wohingegen die drittgenannte Gruppe für bereits größere Kinder gedacht ist, bevor diese mit bloßen Sitzerhöhungen im Kraftfahrzeug sicher untergebracht und gesetzt werden können.

Trotz der bereits vorhandenen Unterteilung und Gruppierung in unterschiedliche Sitzkategorien bei Kraftfahrzeugsicherheitssitzen müssen auch Sitze einer Kategorie nach wie vor Säuglinge, Kleinkinder oder Kinder in unterschiedlichen Körpergrößen aufnehmen können, sind dafür entsprechend verstellbar und einstellbar gestaltet. Die Einstellungsmöglichkeiten werden auch im Bereich von Kindersitzen für Säuglings- oder Kinderkarren verlangt, können auch für andere Sitzmöbel, die Kindersitze aufweisen, beispielsweise Kinderhochstühle oder dgl., von besonderem Vorteil sein.

Eine möglichst genaue Einstellmöglichkeit der Seitenwangen im Kopfstützenbereich ist wiederum bei Kindersicherheitssitzen für Fahrzeuge von hoher Relevanz, da diese Elemente besonders sicherheitsrelevant sind. Denn die Seitenwangen der Kopfstütze sollen den Kopf des in dem Kindersitze aufgenommenen Kindes insbesondere in Seitenaufprallsituationen schützen, wobei zu verhindern ist, dass in einem solchen Fall der Kopf eine lange Wegstrecke "frei fliegt", bevor er von der Seitenwange gehalten wird. Entsprechend sollen die Seitenwangen möglichst nah am Kopf des Kindes angeordnet sein, ohne jedoch dessen Bewegungsfreiheit über Gebühr einzuschränken.

Hierfür ist es bekannt, bei entsprechenden Kindersitzen im Abstand verstellbare Seitenwangen zur Abstützung des Kopfes vorzusehen. Beispielsweise aus der EP 0 401 086 B1 ist ein Kindersitz bekannt, der eine durchgehende, sowohl den Kopfbereich als auch den weiteren Bereich des Oberkörpers und der Beine seitlich begrenzende Seitenwange auf jeder Seite des Sitzes aufweist. Diese Seitenwangen sind mit einer Gestellstange ausgebildet, die über Hülsen an einem Grundgestell des Lehnenteils bzw. des Sitzflächenteils angelenkt ist und so gegenüber diesem Grundgestell verschwenkt werden kann. Dabei können die Seitenwangen in ihrem in horizontaler Richtung gesehenen Abstand zueinander verstellt und über einen entsprechenden Blockiermechanismus zueinander festgelegt werden. Ein Verstellen des Abstandes der Seitenwangen ist bei dem hier gezeigten Sitz kompliziert, das Entriegeln der Gestellteile schwierig und insbesondere nicht oder nur sehr aufwendig bei in dem Kindersitz bereits sitzendem Kind möglich.

Eine weitere Möglichkeit, seitliche Stützwangen an einem Kindersitz zu verstellen ist in der DE 10 2008 002 822 A1 offenbart. In dem dort gezeigten Beispiel betrifft die Verstellmöglichkeit nicht die Seitenwangen einer Kopfstütze, sondern zusätzliche Seitenwangen im Bereich der Schultern eines Kindersitzes. Dort ist eine über eine Kulissenführung miteinander verbundene Mimik enthalten, die bei einer Höhenverstellung der hinsichtlich ihrer Längsposition am Ende des Lehnenteils einstellbaren Kopfstütze zugleich eine Verstellung des Abstandes zwischen den Seitenwangen für die Schultern erfolgt. Wird die Kopfstütze höher gestellt, vergrößert sich bedingt durch die Kulissenmimik der Abstand der im Schulterbereich liegenden Seitenwangen, bei einer niedrigeren Einstellung der Kopfstütze wird der Abstand verkleinert.

Auch hier ist eine Einstellung des Abstandes der Seitenwangen bei bereits im Kindersitz untergebrachtem und dort sitzenden Kind nicht bzw. nur sehr schwer möglich. Darüber hinaus wird die Kopplung zwischen der Höhenverstellung des Kopfstützenteils und der Abstandsverstellung zwischen den seitlichen Stützwangen als nachteilig empfunden. Zunächst einmal ist eine derartige Kopplung für die Seitenwangen an der Kopfstütze nicht praktikabel, da die Kopfbreite nicht in dem Maße von der Körpergröße des Kindes abhängt wie etwa die Breite des Schultergürtels, vielmehr von der Kopfform des Kindes abhängig ist. Darüber hinaus gestattet die in dieser Druckschrift offenbarte Kopplung zwischen Höheneinstellung des Kopfstützenteils und Abstandseinstellung der seitlichen Stützwangen keine individuelle den körperlichen Gegebenheiten des Kindes angepasste Einstellung des Kindersitzes. Es kann mit anderen Worten hier nicht berücksichtigt und individuell eingestellt werden, dass das eine Kind möglicherweise im Schulterbereich bzw. im Kopfbereich breiter gebaut ist als das andere, auch wenn zwei solche Kinder generell mit gleicher Körpergröße (d.h. Körperhöhe) aufwarten können.

In der DE 10 2004 049 754 A1 ist schließlich ein dem in der DE 10 2008 002 822 A1 offenbarten System vergleichbares System für die Justage eines Kindersitzes gezeigt. Auch dort ist eine Abstandsverstellung im Bereich des Oberkörpers eines in dem Kindersitz sitzenden Kindes gelegener Seitenwangen gekoppelt mit der Höhenverstellung der Kopfstütze. Diese Kopplung weist die gleichen Nachteile und Unflexibilitäten auf, wie sie bereits vorstehend zu dem aus der DE 10 2008 002 822 A1 bekannten System beschrieben sind. Die Umsetzung der Bewegung in dem Koppelmechanismus in dem in der DE 10 2004 049 754 A1 gezeigten Beispiel erfolgt über ein Getriebe, beispielsweise ein Zahnradgetriebe, Hebelgetriebe, Zugmittelgetriebe, Kulissen- bzw. Gleitführungen oder miteinander zusammenwirkende Gleitkeile. Das dort offenbarte Getriebe kann zur Umsetzung einer Längsbewegung in eine Drehbewegung oder umgekehrt dienen, beispielsweise mittels einer Zahnstange und eines zugeordneten, hiermit kämmenden Zahnrades, mittels einer Schraube (Spindel) und einer hierauf gelagerten Mutter (Spindelmutter), mittels eines flexiblen Zugmittels (Seil) und einer zugeordneten, durch das Zugmittel drehbaren Rolle oder mittels eines Kurbelgetriebes.

Ein gattungsgemässer Kindersitz ist aus dem Dokument WO-A-2005/079159 bekannt.

Vor dem Hintergrund des bekannten Standes der Technik ist es Aufgabe der vorliegenden Erfindung, einen Kindersitz der eingangs genannten Art dahingehend weiterzubilden, als dass er eine flexible Einstellung des entlang einer horizontalen Richtung genommenen Abstandes zwischen den Stützwangen der Kopfstütze eines solchen Kindersitzes erlaubt, wobei diese Einstellmöglichkeit insbesondere bei in dem Kindersitz sitzenden Kind möglich sein soll, um eine entsprechende Anpassung besonders genau vornehmen zu können.

Diese Aufgabe wird gelöst durch einen Kindersitz mit den Merkmalen des Patentanspruches 1. Vorteilhafte Weiterbildungen eines solches Kindersitzes sind in den abhängigen Ansprüchen 2 bis 11 bezeichnet und ausgeführt.

Durch die Erfindung wird ein Kindersitz der eingangs genannten Art dahingehend weitergebildet, dass die Abstandseinstelleinrichtung ein Getriebe umfasst mit einem um eine Rotationsachse verdrehbaren ersten Getriebeelement und einem zweiten und einem dritten, jeweils translatorisch bewegten Getriebeelement, wobei das zweite Getriebeelement mit der ersten Stützwange und das dritte Getriebeelement mit der zweiten Stützwange verbunden ist, wobei das erste Getriebeelement mit dem zweiten und dem dritten Getriebeelement derart gekoppelt ist, dass durch eine Rotation des ersten Getriebeelementes um die Rotationsachse entgegengesetzt gerichtete und gleichzeitige translatorische Bewegungen des zweiten und des dritten Getriebeelementes bewirkt werden, und wobei ein Antriebshebel zum rotatorischen Antreiben des ersten Getriebeelementes vorgesehen ist.

Mit anderen Worten ist hier in der Abstandsteinstelleinrichtung ein Getriebe angeordnet, welches drei Getriebeelemente umfassten. Während ein erstes Getriebeelement ein um eine Rotationsachse verdrehbares Element ist, welches mittels des Antriebshebels rotatorisch angetrieben wird, sind die beiden weiteren Getriebeelemente translatorisch bewegte Getriebeelemente und jeweils mit dem ersten Getriebeelement gekoppelt. Die beiden translatorisch angetriebenen Getriebeelemente sind jeweils mit einer der Stützwangen verbunden, so dass bei einem Verdrehen des ersten Getriebeelementes die beiden weiteren Getriebeelemente, also das zweite und das dritte Getriebeelement, jeweils in entgegen gesetzter Richtung zueinander angetrieben und translatorisch bewegt werden, um damit eine Abstandsverstellung der seitlichen Stützwangen zu bewirken. Diese Abstandsverstellung ist dabei insbesondere mit Vorteil eine symmetrische. Der Antriebshebel ist - sei dies unmittelbar oder sei dies über ein zwischengeschaltetes Manipulationsmittel - manuell zu betätigen, wobei eine Betätigung insbesondere mit Vorteil von einer Oberseite des Kindersitzes her möglich ist. Dabei sollte die Anordnung des Antriebshebels bzw. des Manipulationselementes derart sein, dass ein Antreiben des ersten Getriebeelementes über den Antriebshebel insbesondere auch bei bereits in dem Kindersitz sitzendem Kind möglich ist. Dies ist insbesondere dann möglich, wenn der Hebel von der Oberseite des Kindersitzes her zugänglich ist und zugleich auch ausgehend von einer Position vor dem Kindersitz, das heißt mit zugewandter Sitzfläche, aus erreicht werden kann.

Mit der Erfindung wird also bereits in ihrer allgemeinsten Form eine besonders einfach zu bedienende und zuverlässige, individuell einstellbare Verstellmöglichkeit für den Seitenabstand der Stützwangen der Kopfstütze eines Kindersitzes offenbart und vorgeschlagen.

Gemäß einer vorteilhaften Weiterbildung der Erfindung kann das erste Getriebeelement mit seiner Rotationsachse auf einer eine horizontale Verbindungslinie zwischen den seitlichen Stützwangen senkrecht schneidenden, von beiden seitlichen Stützwangen in jeder ihrer möglichen Abstandspositionen gleich weit entfernten Mittelsenkrechten angeordnet sein. Dieser Aufbau ergibt eine symmetrische Anordnung des Getriebes und eröffnet damit die Möglichkeit einer symmetrischen Verstellung der Seitenwangen der Kopfstütze hinsichtlich ihres Abstandes.

In einer besonders einfachen und bevorzugten Variante des erfindungsgemäßen Kindersitzes ist das erste Getriebeelement ein Zahnrad und sind das zweite und das dritte Getriebeelement jeweils mit dem Zahnrad kämmende Zahnstangen. Diese Zahnstangen sind insbesondere in paralleler, einander in Bezug auf das Zahnrad diametral gegenüberliegender Anordnung arrangiert und weisen mit ihren mit dem Zahnrad kämmenden Zahnungen aufeinander zu. Auf diese Weise ergibt sich eine gleichzeitige Verlagerung der Zahnstangen in einander entgegen gesetzter Richtung, wenn das Zahnrad rotiert und eine entsprechende translatorische Bewegung der Zahnstangen durch die ineinander greifenden Zahnungen auslöst.

Mit Vorteil weist der erfindungsgemäße Kindersitz in einer Ausgestaltungsvariante einen eine Mehrzahl von Rastpositionen aufweisenden Rastmechanismus zum Verrasten der Abstandseinstelleinrichtung in vorgegebenen Positionen unterschiedlichen Abstandes der Stützwangen auf. Dies ermöglicht neben einer einfachen und schnell bedienbaren Anpassungsmöglichkeit des Seitenabstandes der Seitenwangen der Kopfstütze die Möglichkeit, die Seitenwangen in den vorgegebenen Positionen unterschiedlichen Abstandes zu verrasten, insbesondere an dem sonstigen Kopfstützenteil festzulegen. Dabei sollte insbesondere bei einer Anwendung des Kindersitzes als Kindersicherheitssitz für Fahrzeuge die Verrastung dergestalt sein, dass auch bei einer höheren Kraftbeanspruchung, wie sie typischerweise durch einen Aufprall im Zuge eines Unfalles auftreten kann, die Verrastung nicht gelöst wird, sondern die Seitenwange ihre vorgegebene Position an der Kopfstütze sicher hält. Dies kann beispielsweise durch eine entsprechende Wahl von Kraftübertragungsverhältnissen geschehen, so dass bereits mit geringen Rastkräften aufgrund günstiger Kraftübertragungsketten die Rastposition auch dann gehalten werden kann, wenn auf die Seitenwange deutliche Kräfte ausgeübt werden.

Um die Abstandseinstelleinrichtung, wenn sie in einer der vorgegebenen Positionen verrastet ist, zusätzlich zu sichern, kann ein Sperrmittel zum Blockieren derselben vorgesehen sein. Ein solches Sperrmittel kann z.B. ein zusätzlich zu betätigender Sicherungshebel oder dgl. sein. Ein derartiges Sperrmittel verhindert insbesondere, dass durch eine ungewollte Manipulation der Rastmechanismus gelöst und die Stützwangen in ihrem Abstand zueinander verstellt werden können. Das Sperrmittel kann dabei insbesondere einen Lösemechanismus aufweisen, mit dem es sich lösen lässt und der mit einer Rückstellkraft, insbesondere einer Federkraft in Richtung der blockierenden bzw. sperrenden Stellung beaufschlagt ist.

Zum Betätigen der Abstandseinstellrichtung kann, wie gemäß einer vorteilhaften Weiterbildung der Erfindung vorgeschlagen, an dem Lehnenteil, insbesondere an einem oberen Ende der Kopfstütze, ein bewegbar dort festgelegter Schieber angeordnet sein, der mit dem Antriebshebel in einer solchen Weise gekoppelt ist, dass bei einem Verschieben des Schiebers der Antriebshebel bewegt wird. Dabei können, wenn der Kindersitz wie vorstehend als besondere Ausgestaltung vorgeschlagen einen Rastermechanismus und ggf. Sperrmittel aufweist, diese in dem Schieber bzw. seiner Laufschiene oder dgl. Bewegungsstrecke integriert sein. Der Rastmechanismus kann dabei durch Raststrukturen und Gegenstrukturen gebildet sein, die an dem Schieber bzw. entlang des Verschiebeweges des Schiebers angeordnet sind.

Für eine weitere Verbesserung der Einstellmöglichkeiten des erfindungsgemäßen Kindersitzes kann die Kopfstütze entlang des Lehnenteils in ihrer Position in einer Längserstreckungsrichtung des Lehnenteils gesehen veränderbar einstellbar gestaltet sein. Derartige Einstellmechanismen sind dem Grunde nach bekannt und können für die Zwecke dieser Erfindung adaptiert werden. Entscheidend ist dabei lediglich, dass in einem solchen Fall die Abstandseinstelleinstellrichtung zum Verstellen des Abstandes der Stützwangen an dem höhenverstellbaren Element, welches die Kopfstütze trägt, angeordnet ist.

Wie bereits ausgeführt, kann der Kindersitz nach der Erfindung mit besonderem Vorteil ein Kindersicherheitssitz für Fahrzeuge sein. Dabei kann dieser insbesondere eine Gurteinrichtung zum Anschnallen eines in dem Kindersitz aufgenommenen Kindes aufweisen. Es ist jedoch auch ebenso möglich und im Sinne der Erfindung, dass zum Anschnallen des Kindes im Kindersicherheitssitz der fahrzeugeigene Gurt Verwendung findet, wie dies insbesondere bei den Gruppe 2 Kindersitzen üblich ist.

Weitere Vorteile und Merkmale ergeben sich aus der nachfolgenden Beschreibung eines Ausführungsbeispiels anhand der beigefügten Figuren. Dabei zeigen:
- Fig. 1: eine dreidimensionale Ansicht eines erfindungsgemäßen Kindersitzes in Form eines Kindersicherheitssitzes für Fahrzeuge mit in einer oberen Position befindlicher Kopfstütze und in einer mit maximalem Abstand eingestellten Weite der seitlichen Stützwangen;
- Fig. 2: eine Ansicht des Kindersitzes in der Einstellung gemäß Fig. 1 aus anderer Perspektive;
- Fig. 3: eine erste Ansicht des erfindungsgemäßen Kindersitzes mit in anderer Position befindlicher Kopfstütze und in einem minimalen Abstand zueinander eingestellten seitlichen Stützwangen der Kopfstütze;
- Fig. 4: eine Ansicht des erfindungsgemäßen Kindersitzes in der Einstellung gemäß Fig. 3 aus anderer Perspektive;
- Fig. 5: in einer Detaildarstellung die wesentlichen Elemente der Kopfstütze für die Abstandsverstellung der seitlichen Stützwangen in einer rückseitigen Ansicht (Fig. 5a) sowie einer Schnittdarstellung entlang der Schnittlinie A-A in der Fig. 5a (Fig. 5b) und mit minimal eingestelltem Abstand der seitlichen Stützwangen;
- Fig. 6: in zwei den Figuren 5a und 5b vergleichbaren Darstellungen, nämlich einer rückwärtigen Ansicht auf Fig. 6a) sowie einer Schnittdarstellung genommen entlang der Schnittlinie A-A aus Fig. 6a (Fig. 6b) das detailgemäß Fig. 5 in einer mit maximalem Abstand der seitlichen Stützwangen eingestellten Position;
- Fig. 7: in einer Vorderansicht das detailgemäß Fig. 5, also mit minimalen Abstand der seitlichen Stützwangen der Kopfstütze; und
- Fig. 8: in einer der Fig. 7 vergleichbaren Vorderansicht die Details gemäß den Figuren 6, also mit in maximalem Abstand eingestellten seitlichen Stützwangen.

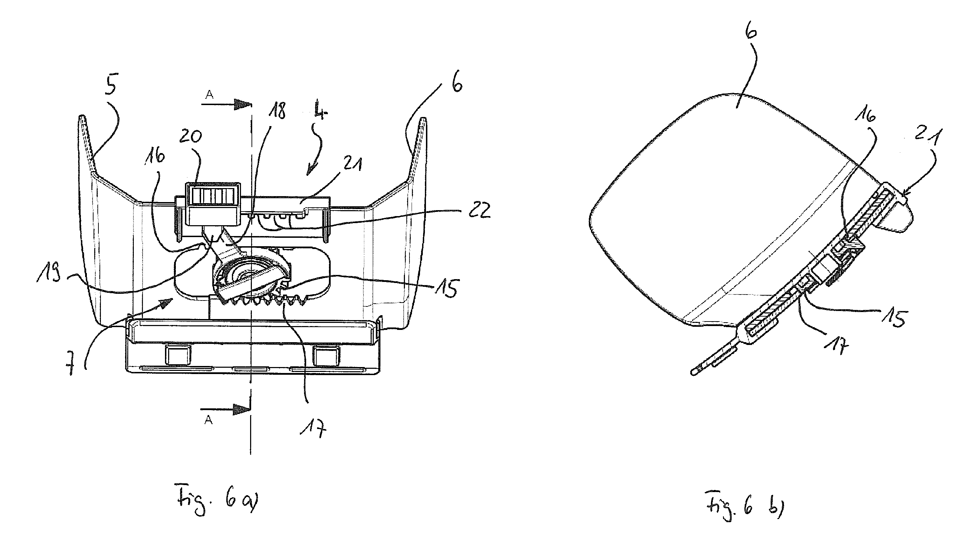

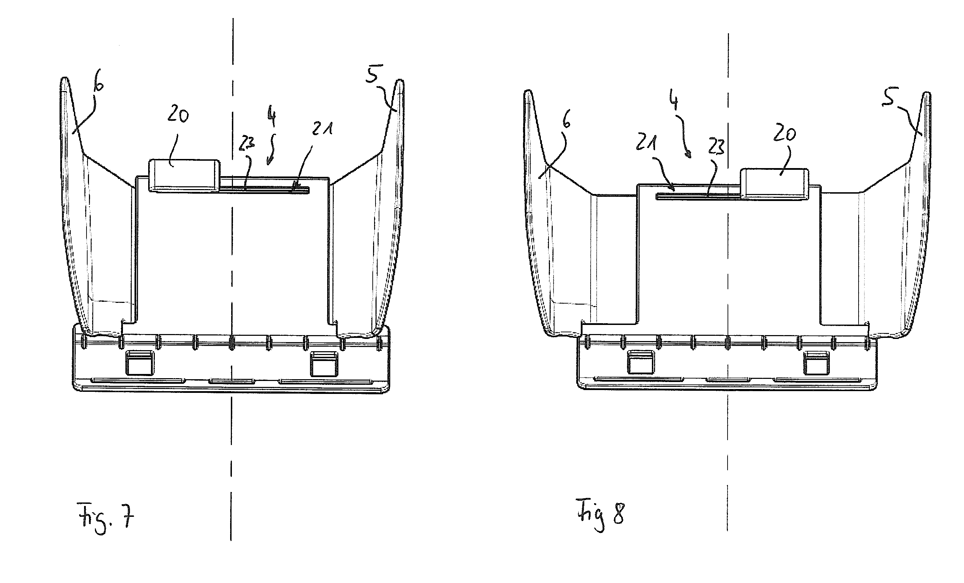

In den Figuren ist in verschiedenen Darstellungen, teilweise auszugsweise mit den wesentlichen und relevanten Elementen ein Ausführungsbeispiel eines erfindungsgemäßen Kindersitzes, hier in Form eines Kindersicherheitssitzes für Kraftfahrzeuge, gezeigt und allgemein mit dem Bezugszeichen 1 bezeichnet. Bei dem hier gezeigten Kindersitz 1 handelt es sich, wie bereits dargelegt, um einen Kindersicherheitssitz, hier einen solchen der Gruppe O/O + nach aktueller Klassifizierung. Dieser weist ein Sitzflächenteil 2 und ein Lehnenteil 3 auf, wobei Sitzflächenteil 2 und Lehnenteil 3 in für diese Kindersicherheitssitze der Gruppe O/O + typischer Weise einstückig in Form einer Sitzschale gebildet sind. An dem Lehnenteil 3 ist eine Kopfstütze 4 angeordnet. Diese Kopfstütze 4 verfügt über zwei seitliche Stützwangen 5, 6. Diese liegen sich in im Wesentlichen horizontaler Richtung gesehen in einem Abstand gegenüber. Der Kindersitz 1 verfügt über eine Abstandseinstelleinrichtung 7 (vgl. Figuren 6, 7) mittels derer die seitlichen Stützwangen 5, 6 in ihrem Abstand zueinander verstellbar und in zumindest zwei Einstellpositionen mit jeweils unterschiedlichem Abstand zueinander relativ zu dem Lehnenteil 3 festlegbar sind.

Der Kindersitz 1 hat an der das Sitzflächenteil 2 und das Lehnenteil 3 ausgebildenden Sitzschale verschwenkbar angelenkt einen Tragegriff 8, wie dies ebenfalls bei Kindersicherheitssitzen der Gruppe O/O + üblich ist. In seitlich sich an das Sitzflächenteil 2 anschließenden Bereichen des Kindersitzes 1 sind Gurthalter 9 angeordnet. Diese dienen in der bekannten Weise der Aufnahme des Beckengurtteils eines Dreipunktsicherheitsgurtes eines Kraftfahrzeuges, mit welchem der Kindersitz 1 auf einem Kraftfahrzeugsitz festgelegt und angeschnallt werden kann. Der Kindersitz 1 verfügt über eine Gurteinrichtung, die gebildet ist aus hier lediglich angedeuteten, parallel im Bereich des Lehnenteils 3 austretenden Sitzgurten 10 und einem eine Klinke 11, über die die Sitzgurte 10 geführt und mit dieser verbunden sind, aufnehmenden Gurtschloss 12.

Eine Durchführung der Sitzgurte 10 im Bereich des Lehnenteils 3 ist auf einer relativ zu dem Lehnenteil 3 höhenverschiebbaren Rückenplatte 13 angeordnet, mit der die Kopfstütze 4 über eine Gelenkanbindung 14 um eine im wesentlichen horizontale und in einer Ebene des Lehnenteils 3 verlaufende Schwenkachse verschwenkbar verbunden ist. In den Figuren ist der Kindersitz 1 ohne eine noch aufzulegende Polsterung und einen Bezug dargestellt. Insbesondere sind die seitlichen Stützwangen 5, 6 des kompletten Sitzes noch gepolstert, da sie dem Abfangen des empfindlichen Kopfes eines in dem Kindersitz 1 aufgenommenen Kindes im Falle eines Aufpralls, insbesondere eines seitlichen Aufpralls, dienen, entsprechende Beschleunigungen und Kräfte sicher abfangen müssen, um Verletzungen des Kindes zu verhindern.

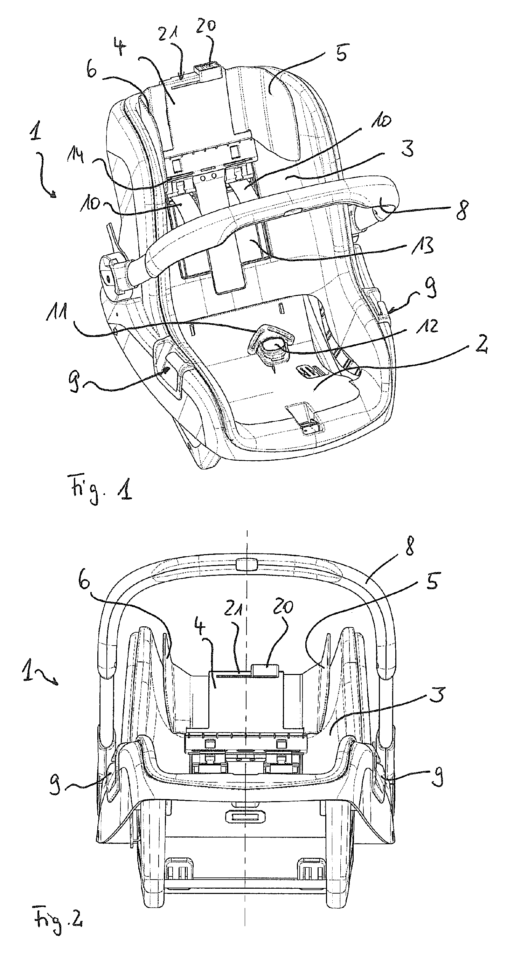

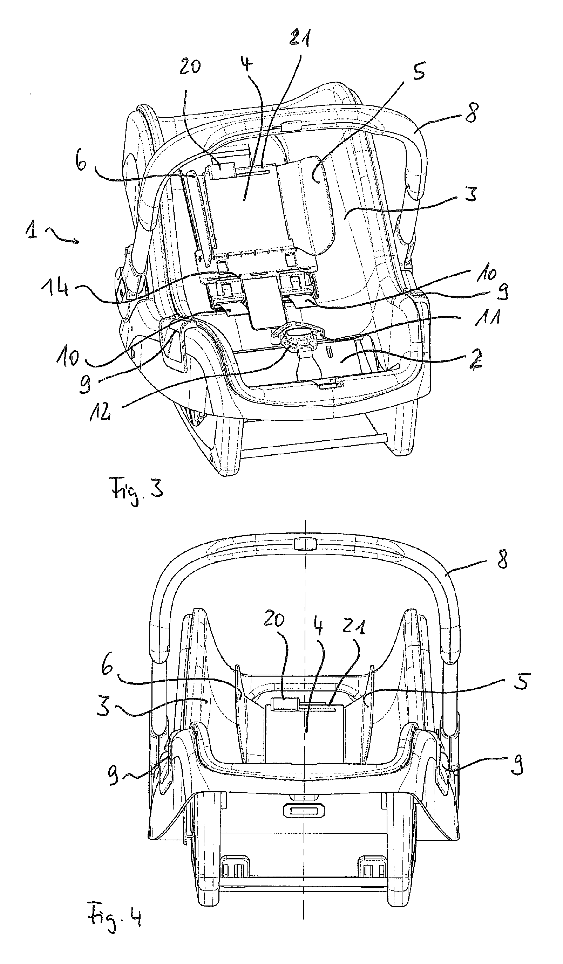

Wie ein Vergleich der Figuren 1 und 2 mit den Figuren 3 und 4 zeigt, ist die Rückenplatte 13 und mit dieser nicht nur die Durchführungen der Sitzgurte 10, sondern auch die daran festgelegte Kopfstütze 4 in einer vertikalen Position und Höhe relativ zu dem Lehnenteil 3 verlager- und festlegbar, also einstellbar.

Ein Vergleich zwischen den Figuren 1 bzw. 2 und 3 bzw. 4, hierbei insbesondere gut zu erkennen im Vergleich der Figuren 2 und 4, zeigt auch die unterschiedliche Einstellung der seitlichen Stützwangen 5, 6 in ihrem Abstand zueinander. Während in der Fig. 4 (auch in der Fig. 3) die seitlichen Stützwangen 5, 6 in einem kleinstmöglichen Abstand relativ zueinander dargestellt sind, ist dieser Abstand in den Figuren 1 und 2 maximal weit. In den Figuren ist die Einstellung des in dieser Weise hinsichtlich nicht nur der Höhenposition der Kopfstütze 4, sondern auch des Abstandes der seitlichen Stützwangen 5, 6 verstellbaren Kindersitzes 1 so gezeigt, dass bei niedrig eingestellter Kopfstütze 4 ein enger Abstand der seitlichen Stützwangen 5 und 6 gegeben ist, wohingegen bei hoch eingestellter Kopfstütze 4 der Abstand zwischen den seitlichen Stützwangen 5, 6 ein weiter ist. Dies entspricht einer üblichen und zu erwartenden Einstellung. Allerdings ist hier zu betonen, dass die Einstellung der Höhe der Kopfstütze 4 an dem Lehnenteil 3 völlig unabhängig von der Einstellung des Abstandes der seitlichen Stützwangen 5, 6 geschehen kann und umgekehrt. Somit ergibt sich bei dem gezeigten erfindungsgemäßen Kindersitz 1 nicht etwa ein vorgegebener Verlauf und eine feststehende Korrelation zwischen Höheneinstellung der Kopfstütze 4 und Abstandseinstellung der seitlichen Stützwangen 5, 6. Vielmehr können beide Parameter individuell angepasst auf das jeweils in dem Kindersitz 1 aufzunehmende Kind justiert werden. So kann also der Kindersicherheitssitz beispielsweise auch für ein kleingewachsenes Kind mit großem Kopf optimal eingestellt werden, indem trotz Einstellung der Kopfstütze auf vergleichsweise niedriger Position eine vergleichsweise große Öffnungsweite zwischen den seitlichen Stützwangen 5, 6 eingestellt werden kann.

Auch ist hier zu betonen, dass zwischen den gezeigten Extrempositionen der Weiteneinstellung bzw. der Einstellung des Abstandes zwischen den seitlichen Stützwangen 5, 6 gemäß den Figuren 2 bzw. 4 (1 bzw. 3) verschiedene Zwischenpositionen wähl- und einstellbar sind und verrastend festgelegt werden können.

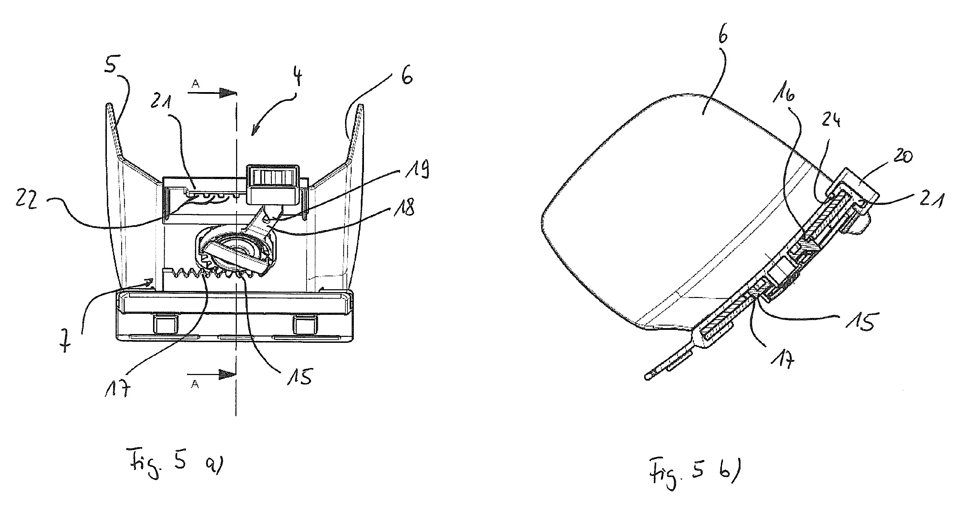

Nachfolgend wird die erfindungsgemäße und besondere Funktion und Wirkweise der Abstandseinstelleinrichtung 7 anhand der Figuren 5 bis 8 näher erläutert und dargestellt. An der Kopfstütze 4 ist mit einer Rotationsachse auf einer im Wesentlichen vertikal ausgerichteten Symmetrie- und Mittellinie ein Zahnrad 15 angeordnet. Dieses greift mit seiner Umfangsverzahnung in eine Längsverzahnung als Zahnstangen 16 bzw. 17 ausgebildeter, mit den seitlichen Stützwangen 5 bzw. 6 einstückig verbundener Abschnitte ein und ist drehfest mit einem Antriebshebel 18 verbunden. Das Zahnrad 15 und die Zahnstangen 16, 17 bilden ein Getriebe, wobei das Zahnrad 15 und jede der Zahnstangen 16, 17 jeweils Getriebeelemente dieses Getriebes sind. Der Antriebshebel 18 ist in diesem Ausführungsbeispiel über eine gelenkige Anbindung 19 mit einem Schieber 20 verbunden, der in einer Führung 21 geführt- und her bewegbar ist. Durch Verschieben des Schiebers 20 in der Führung 21 wird somit der Antriebshebel 18 und mit diesem das Zahnrad 15 im bzw. gegen den Uhrzeigersinn bewegt. Wird der Schieber dabei in der Ansicht gemäß der Figuren 5a bzw. 6a von rechts nach links bewegt, so erfolgt eine Rotation des Zahnrades 15 entgegen dem Uhrzeigersinn, wodurch die Zahnstangen 16 und 17 ausgehend von der Drehachse des Zahnrades nach außen getrieben werden, sich der Abstand zwischen den mit den Zahnstangen 16, 17 einstückig verbundenen seitlichen Stützwangen 5, 6 vergrößert bis hin zu der in der Fig. 6a gezeigten maximalen Abstand mit in einer äußersten Endposition befindlichem Schieber 20. Wird der Schieber 20 in der Führung 21 in umgekehrter Richtung bewegt, bewegt sich dadurch angetrieben das Zahnrad im Uhrzeigersinn, wodurch die Zahnstangen 16, 17 in Richtung der Drehachse des Zahnrades gezogen und aufeinander zu bewegt werden, sich die mit den Zahnstangen einstückig verbundenen seitlichen Stützwangen 5, 6 symmetrisch zu der Mittelachse aufeinander zu bewegen bis zu der in der Fig. 5a gezeigten Endposition mit maximal geringem Abstand zwischen den seitlichen Stützwangen 5, 6.

Zu erkennen sind durch Vertiefungen 22 in der Führung 21 vorgegebene Rastpositionen, in denen der Schieber 20 in Zwischen- bzw. Mittelstellungen verrastet und festgelegt werden kann. Hierzu ist in dem Schieber 20 ein Federmechanismus vorhanden, der ein Rastelement in die Vertiefungen 22 drückt und erst bei Betätigen eines Endsperrknopfes (nicht gezeigt) ein Befreien des Rastelementes aus der Vertiefung 22 erlaubt, wodurch dann der Schieber 20 weiter entlang der Führung 21 verschoben werden kann. Durch diesen Rastmechanismus wird sichergestellt, dass eine einmal eingestellte Abstandseinstellung der seitlichen Stützwangen 5, 6 sicher beibehalten wird während des Gebrauchs des Kindersitzes 1.

Ein Vergleich der Kopfstütze 4 in den Darstellungen gemäß Figuren 7 und 8 zeigt noch einmal sehr anschaulich die unterschiedlichen Abstandseinstellung der seitlichen Stützwangen 5, 6. Zudem ist zu erkennen, dass Bestandteil der Führung 21 ein Schlitz 23 ist, in den ein Vorsprung 24 des Schiebers (vgl. Fig. 5b) eingreift.

Aus der vorstehenden Beschreibung eines Ausführungsbeispiels sind noch einmal die Vorteile und Merkmale der Erfindung deutlich geworden.

### Bezugszeichenliste

- 1: Kindersitz
- 2: Sitzflächenteil
- 3: Lehnenteil
- 4: Kopfstütze
- 5: seitliche Stützwange
- 6: seitliche Stützwange
- 7: Abstandseinstelleinrichtung
- 8: Tragegriff
- 9: Gurthalter
- 10: Sitzgurt
- 11: Klinke
- 12: Gurtschloss
- 13: Rückenplatte
- 14: Gelenkanbindung
- 15: Zahnrad
- 16: Zahnstange
- 17: Zahnstange
- 18: Antriebshebel
- 19: gelenkige Anbindung
- 20: Schieber
- 21: Führung
- 22: Vertiefung
- 23: Schlitz
- 24: Vorsprung

## Patentansprüche

1. Kindersitz mit einem Sitzflächenteil (2) und einem Lehnenteil (3) sowie einer an dem Lehnenteil (3) angeordneten Kopfstütze (4), die eine erste und eine zweite seitliche Stützwange (5, 6) aufweist, welche Stützwangen (5, 6) sich in im Wesentlichen horizontaler Richtung in einem Abstand gegenüberliegen und über eine Abstandseinstelleinrichtung (7) in dem Abstand zueinander verstellbar und in zumindest zwei Einstellpositionen mit jeweils unterschiedlichem Abstand zueinander relativ zu dem Lehnenteil (3) festlegbar sind, wobei die Abstandseinstelleinrichtung (7) ein Getriebe umfasst mit einem um eine Rotationsachse verdrehbaren ersten Getriebeelement (15) und einem zweiten (16) und einem dritten (17), jeweils translatorisch bewegten Getriebeelement, wobei das zweite Getriebeelement (16) mit der ersten Stützwange (5) und das dritte Getriebeelement (17) mit der zweiten Stützwange (6) verbunden ist, wobei das erste Getriebeelement (15) mit dem zweiten (16) und dem dritten (17) Getriebeelement derart gekoppelt ist, dass durch eine Rotation des ersten Getriebeelementes (15) um die Rotationsachse entgegengesetzt gerichtete und gleichzeitige translatorische Bewegungen des zweiten (16) und des dritten (17) Getriebeelementes bewirkt werden, **dadurch gekennzeichnet, dass** ein Antriebshebel (18) zum rotatorischen Antreiben des ersten Getriebeelementes (15) vorgesehen ist.

2. Kindersitz nach Anspruch 1, **dadurch gekennzeichnet, dass** das erste Getriebeelement (15) mit seiner Rotationsachse auf einer eine horizontale Verbindungslinie zwischen den seitlichen Stützwangen (5, 6) senkrecht schneidenden, von beiden seitlichen Stützwangen (5, 6) in jeder ihrer möglichen Abstandspositionen gleich weit entfernten Mittelsenkrechten angeordnet ist.

3. Kindersitz nach einem der vorstehenden Ansprüche, **dadurch gekennzeichnet, dass** das erste Getriebeelement (15) ein Zahnrad ist und dass das zweite (16) und das dritte (17) Getriebeelement jeweils mit dem Zahnrad kämmende Zahnstangen sind.

4. Kindersitz nach einem der vorhergehende Ansprüche, **gekennzeichnet durch** einen eine Mehrzahl von Rastpositionen aufweisenden Rastmechanismus zum Verrasten der Abstandseinstelleinrichtung (7) in vorgegebenen Positionen unterschiedlichen Abstandes der Stützwangen (5, 6).

5. Kindersitz nach Anspruch 4, **gekennzeichnet durch** Sperrmittel zum Blockieren der Abstandseinrichtung in einer vorgegebenen Position, in der sie **durch** den Rastmechanismus verrastet ist.

6. Kindersitz nach Anspruch 5, **gekennzeichnet durch** einen entgegen einer Rückstellkraft betätigbaren Lösemechanismus zum Lösen des Sperrmittels und Freigeben der Abstandseinrichtung (7) aus der blockierten und verrasteten Position.

7. Kindersitz nach einem der vorhergehenden Ansprüche, **gekennzeichnet durch** einen an dem Lehnenteil (3), insbesondere an einem oberen Ende der Kopfstütze (4), bewegbar festgelegten Schieber (20), der mit dem Antriebshebel (18) in der Weise gekoppelt ist, dass bei einem Verschieben des Schiebers (20) der Antriebshebel (18) bewegt wird.

8. Kindersitz nach Anspruch 3 und 7, **dadurch gekennzeichnet, dass** der Rastmechanismus Raststrukturen und Gegenstrukturen (22) aufweist, von denen die einen an dem Schieber (20), die anderen entlang eines Verschiebeweges des Schiebers (20) angeordnet sind.

9. Kindersitz nach einem der vorhergehenden Ansprüche, **dadurch gekennzeichnet, dass** die Kopfstütze (4) in ihrer Position in einer Längserstreckungsrichtung des Lehnenteils (3) gesehen veränderbar einstellbar ist.

10. Kindersitz nach einem der vorhergehenden Ansprüche, **dadurch gekennzeichnet, dass** er ein Kindersicherheitssitz für Fahrzeuge ist.

11. Kindersitz nach Anspruch 10, **dadurch gekennzeichnet, dass** er eine Gurteinrichtung (10, 11, 12) zum Anschnallen eines in dem Kindersitz (1) aufgenommenen Kindes aufweist.

## Claims

1. A child seat with a seating surface part (2) and a backrest (3) as well as a headrest (4) arranged on the backrest (3), which has a first and a second lateral supporting cheek (5, 6), which supporting cheeks (5, 6) are opposite to each other in a substantially horizontal direction at a certain distance, whereas said distance can be adjusted via a distance adjustment device (7), which supporting cheeks can adopt at least two setting positions with respectively a different distance with respect to each other and to the backrest (3), whereas the distance adjustment device (7) includes a transmission with a first transmission element (15) rotatable around a rotation axis as well as a second (16) and a third (17) transmission elements, respectively mobile in translation, whereas the second transmission element (16) is connected to the first supporting cheek (5) and the third transmission element (17) is connected to the second supporting cheek (6), whereas the first transmission element (15) is coupled to the second (16) and the third (17) transmission element in such a way that opposite and simultaneous translatory movements of the second (16) and of the third (17) transmission element are initiated by a rotation of the first transmission element (15) about the rotation axis, **characterised in that** a drive lever (18) is provided for driving the first transmission element (15) into rotation.

2. A child seat according to claim 1, **characterised in that** the first transmission element (15) is arranged with its rotation axis on a perpendicular bisector situated away from both lateral supporting cheeks (5, 6) by the same distance, at each of their possible distance positions, and intersecting perpendicularly a horizontal connection line between the lateral supporting cheeks (5, 6).

3. A child seat according to one of the previous claims, **characterised in that** the first transmission element (15) is a toothed gear and that the second (16) as well as the third (17) transmission elements are respectively gear racks meshing with the toothed gear.

4. A child seat according to any of the preceding claims, **characterised by** a latching mechanism contained a plurality of lock-in positions for locking the distance adjustment device (7) in preset positions at a different distance from the supporting cheeks (5, 6).

5. A child seat according to claim 4, **characterised by** blocking means for blocking said distance adjustment device in a predetermined position, in which it will be locked by the latching mechanism.

6. A child seat according to claim 5, **characterised by** a release mechanism which can be actuated by a recall force for loosening the blocking means and releasing the distance adjustment device (7) from the blocked and latched position.

7. A child seat according to any of the preceding claims, **characterised by** a slider (20) which is mobile against the backrest (3), in particular against an upper end of the headrest (4), which is coupled to the drive lever (18) in such a way that it is moved by actuating the slider (20) of the drive lever (18).

8. A child seat according to claims 3 and 7, **characterised in that** the latching mechanism contains latching structures and counter-structures (22), among which some are arranged against the slider (20), others along a displacement path of the slider (20).

9. A child seat according to any of the preceding claims, **characterised in that** the position of the headrest (4) can be adjusted and modified in a longitudinal extension direction of the backrest (3).

10. A child seat according to any of the preceding claims, **characterised in that** it is a child safety seat for vehicles.

11. A child seat according to claim 10, **characterised in that** it contains a belt device (10, 11, 12) for strapping a child installed in the child seat (1).

## Revendications

1. Siège pour enfant avec un partie surface d'assise (2) et un dossier (3) de même qu'un appuie-tête (4) disposé contre le dossier (3), présentant une première et une seconde joues supports (5, 6), lesquelles joues supports (5, 6) sont opposées d'une certaine distance dans une direction sensiblement horizontale, dont la distance de séparation est réglable par un dispositif de réglage de distance (7) et lesquelles joues supports peuvent adopter au moins deux positions de réglage avec une distance respectivement différente l'une par rapport à l'autre et par rapport au dossier (3), où le dispositif de réglage de distance (7) comprend une transmission avec un premier élément de transmission (15) rotatif autour d'un axe de rotation de même qu'un deuxième (16) et un troisième (17) éléments de transmission, respectivement mobiles en translation, où le deuxième élément de transmission (16) est connecté à la première joue support (5) et le troisième élément de transmission (17) est connecté à la deuxième joue support (6), qu'une rotation du premier élément de transmission (15) autour de l'axe de rotation déclenche des mouvements de translation opposés et simultanés du deuxième (16) et du troisième éléments de transmission, **caractérisé en ce qu'**un levier d'entraînement (18) est prévu pour l'entraînement rotatif du premier élément de transmission (15).

2. Siège pour enfant selon la revendication 1, **caractérisé en ce que** le premier élément de transmission (15) est disposé avec son axe de rotation sur une bissectrice perpendiculaire coupant à angle droit une ligne de connexion horizontale entre les joues supports (5, 6) latérales, bissectrice située à égale distance des deux joues supports latérales (5, 6) dans chacune de leurs positions distantes possibles.

3. Siège pour enfant selon l'une des revendications précédentes, **caractérisé en ce que** le premier élément de transmission (15) est un pignon et que le deuxième (16) et le troisième (17) éléments de transmission sont respectivement des crémaillères s'engrenant dans le pignon.

4. Siège pour enfant selon l'une quelconque des revendications précédentes, **caractérisé par** un mécanisme d'arrêt présentant une pluralité de positions d'arrêt pour verrouiller le dispositif de réglage de distance (7) dans des positions prédéterminées d'une distance différente par rapport aux joues supports (5, 6).

5. Siège pour enfant selon la revendication 4, **caractérisé par** des moyens de verrouillage pour bloquer le dispositif de réglage de distance dans une position prédéterminée, dans laquelle ledit dispositif est verrouillé par le mécanisme d'arrêt.

6. Siège pour enfant selon la revendication 5, **caractérisé par** un mécanisme de libération actionnable par une force de rappel pour libérer les moyens de verrouillage et dégager le dispositif de réglage de distance (7) de la position bloquée et verrouillée.

7. Siège pour enfant selon l'une quelconque des revendications précédentes, **caractérisé par** un coulisseau (20) susceptible de se déplacer contre le dossier (3), en particulier contre une extrémité supérieure de l'appuie-tête (4), coulisseau couplé au levier d'entraînement (18) de telle sorte qu'il peut être actionné par le déplacement dudit coulisseau (20) du levier d'entraînement (18).

8. Siège pour enfant selon les revendications 3 et 7, **caractérisé en ce que** le mécanisme d'arrêt comporte des structures d'arrêt et des contre-structures (22), certaines étant disposées contre le coulisseau (20), d'autres le long d'un trajet de déplacement du coulisseau (20).

9. Siège pour enfant selon l'une quelconque des revendications précédentes, **caractérisé en ce que** la position de l'appuie-tête (4) est réglable dans sa direction d'extension longitudinale du dossier (3).

10. Siège pour enfant selon l'une quelconque des revendications précédentes, **caractérisé en ce qu'**il est un siège de sécurité pour enfant pour véhicules.

11. Siège pour enfant selon la revendication 10, **caractérisé en ce qu'**il présente un dispositif de ceinture (10, 11, 12) pour attacher un enfant installé dans le siège pour enfant (1).
